Europäisches Patentamt

(19) European Patent Office

Office européen des brevets

(11) Numéro de publication: **0 113 705**
**A1**

(12) ## DEMANDE DE BREVET EUROPEEN

(21) Numéro de dépôt: **84400041.4**

(22) Date de dépôt: **09.01.84**

(51) Int. Cl.³: **A 63 F 9/08**
**G 09 B 1/20**

(30) Priorité: **10.01.83 FR 8300291**

(43) Date de publication de la demande:
**18.07.84 Bulletin 84/29**

(84) Etats contractants désignés:
**AT BE CH DE GB IT LI LU NL SE**

⑦ Demandeur; **Brincat, Daniel**
**4, Allée du Belvédère Domaine des Lacs de la Guiche**
**F-77310 Ponthierry Saint Fargeau(FR)**

(72) Inventeur: **Brincat, Daniel**
**4, Allée du Belvédère Domaine des Lacs de la Guiche**
**F-77310 Ponthierry Saint Fargeau(FR)**

(74) Mandataire: **Phélip, Bruno et al,**
**c/o Cabinet Harlé & Phélip 21, rue de la Rochefoucauld**
**F-75009 Paris(FR)**

(54) **Article cylindrique à éléments rotatifs incorporés, notamment pour jeu éducatif.**

㊗ Article cylindrique à éléments rotatifs incorporés, notamment pour jeu éducatif.

Cet article est caractérisé en ce qu'une partie en saillie, prévue sur le noyau, qui peut être continue aou discontinue et ce noyau lui-même, sont agencés pour permettre à la saillie de s'effacer élastiquement à l'intérieur du contour circulaire de la section droite du noyau, des moyens étant prévus pour immobiliser axialement les bagues sur le noyau.

Realisation de jeux éducatifs.

FIG.4

EP 0 113 705 A1

Croydon Printing Company Ltd.

Article cylindrique à éléments rotatifs incorporés, notamment
pour jeu éducatif.

L'invention concerne un article dont les caractéristiques originales lui permettent d'être notamment appliqué dans
le domaine des jeux tels que les jeux éducatifs.

A l'heure actuelle, le domaine des jeux suscite
beaucoup d'intérêt. On se préoccupe de plus en plus de trouver
des jeux qui peuvent être manipulés en offrant un très grand
nombre de combinaisons et qui de ce fait ont un effet éducatif
indiscutable.

L'invention est plus particulièrement relative à un
dispositif qui comporte une série de tambours montés à rotation
côte à côte sur un noyau commun et coopérant avec des moyens
agencés pour assurer l'immobilisation individuelle de ces tambours dans une position angulaire choisie ou aléatoire par
rapport à ce noyau, chacun de ces tambours portant extérieurement des signes disposés à sa périphérie selon une répartition
uniforme qui est la même pour l'ensemble des tambours, de façon
à permettre de former des alignements successifs de signes parallèlement à l'axe de rotation des tambours sur le noyau .

Les signes portés par les tambours peuvent être de
nature quelconque et être constitués, par exemple, par des
lettres, des chiffres, des symboles ou autres représentations
graphiques, ou encore par de simples plages colorées de façons
diverses.

Il est ainsi possible, en faisant varier la position
angulaire relative des tambours, de former, par alignement ,
des mots, des nombres ou autres ensembles présélectionnés, selon
la nature de signes portés par les tambours.

On connaît déjà divers dispositifs de ce genre. Dans
certains d'entre-eux, les tambours sont évidés pour former des
bagues dont la périphérie interne comporte une succession de
logements répartis de façon correspondant à la répartition des
signes à la périphérie externe des tambours. Ceux-ci sont montés sur un barreau de diamètre inférieur à celui de l'évidement
interne des tambours, de façon à pouvoir se déplacer chacun ,
indépendemment des autres, dans une direction perpendiculaire
à l'axe dudit barreau. Sous l'effet de la pesenteur, les tambours reposent sur le barreau commun sur lequel s'engagent les
logements internes respectifs des tambours qui sont situés à la verticale du barreau,par rapport auquel les tambours se trouvent ainsi immobilisés. En soulevant chaque tambour, il est possible de le faire tourner par rapport au barreau,puis de l'immobiliser de nouveau dans la position angulaire voulue en le laissant retomber. Un tel dispositif est difficile à manier et exige en général, au moins pour assurer le soulèvement des tambours par rapport au barreau, des mécanismes particuliers.

Dans d'autres dispositifs antérieurement connus, chaque tambour comporte extérieurement,sur une partie de sa face adjacente à celle portant les signes, un crantage avec lequel coopère une lame de ressort portée par un carter à l'intérieur duquel se trouve logé le noyau et les tambours.De tels dispositifs sont en général relativement encombrants et peu faciles à manier.

La demande de brevet FR. 81 14787 décrit un dispositif dans lequel les tambours portant des signes à leur périphérie externe sont constitués par des bagues comportant , sur leur surface interne, des échancrures réparties de façon correspondant à la répartition desdits signes sur chaque tambour et le noyau cylindrique sur lequel sont montés les tambours et dont le diamètre externe est sensiblement égal au diamètre interne des bagues formant les tambours, comporte au moins une partie en saillie, s'étendant parallèlement à l'axe longitudinal du noyau et qui est agencée pour s'engager dans les échancrures desdites bagues./Cette partie en saillie sur la surface externe du noyau est constituée par une nervure longitudinale continue. La modification de la position des tambours les uns par rapport aux autres s'obtient alors en faisant glisser les tambours le long du noyau pour les dégager complètement de ce dernier,puis en les engageant à nouveau sur le noyau, dans la position angulaire voulue .

On conçoit que ce dispositif, malgré sa simplicité, ne peut donner toute satisfaction du fait de la nécessité d'extraire les bagues du noyau lorsqu'on veut modifier la combinaison linéaire de signes formés par les bagues successives.

Le dispositif conforme à l'invention permet de remé-

0113705

3

dier à cet inconvénient.

Il est fondamentalement caractérisé en ce que la partie en saillie prévue sur le noyau, qui peut être continue ou discontinue et ce noyau lui-même, sont agencés pour permettre à la partie en saillie de s'effacer élastiquement à l'intérieur du contour circulaire de la section droite du noyau ,des moyens étant prévus pour immobiliser axialement les bagues sur le noyau.

L'effacement de la partie en saillie du noyau peut être obtenu, par exemple, en ménageant dans le noyau, le long de l'une de ses génératrices, une succession de trous radiaux, espacés de façon à correspondre chacun à un tambour lorsque l'ensemble des tambours est enfilé sur le noyau,et en disposant, dans chacun de ces trous, un organe tel qu'une bille ou un téton, susceptible de coulisser dans le trou et sollicité vers l'extérieur par des moyens élastiques s'appuyant,d'une part, sur le fond de chaque trou, et d'autre part, sur l'organe correspondant, des moyens pouvant être prévus pour empêcher l'organe de s'échapper du trou lorsque le tambour correspondant n'est pas monté sur le noyau.

Conformément à une variante, le même résultat peut être obtenu en prévoyant, à la surface externe du noyau,selon une génératrice de celui-ci, un évidement dans lequel peut s'effacer une barrette longitudinale reliée au corps du noyau par un élément flexible, ladite barrette étant agencée pour venir s'engager dans les échancrures des tambours.

Cette dernière variante peut être réalisée de façon particulièrement avantageuse à l'aide d'un noyau en matière plastique, de préférence évidé et comportant un méplat longitudinal de l'un des bords duquel part une languette flexible prolongeant la périphérie circulaire du noyau et à l'extrémité libre de laquelle est formée une nervure capable de s'engager dans le méplat, par flexion de la languette,pour se dégager desdites échancrures.

Le noyau peut,dans tous les cas, comporter à sa périphérie un seul organe d'arrêt ou plusieurs de ces organes répartis sur cette périphérie.

                                                          des bagues sur
          Les moyens d'immobilisation axiale/le noyau peuvent
être amovibles ou non. Ils sont avantageusement constitués par
des plateaux de préférence circulaires, dont une dimension
transversale est supérieure au diamètre externe du noyau et
qui sont fixés chacun sur une extrémité du noyau,en laissant
entre eux une distance égale à la totalité de l'épaisseur des
bagues. Pour assurer leur fixation sur le noyau, ces plateaux
peuvent par exemple être vissés sur l'extrémité du noyau.
Lorsque le noyau est évidé, ils peuvent comporter en leur centre une partie apte à s'engager à frottement dur dans l'évidement du noyau et qui peut être rendue solidaire de ce dernier
par tous moyens connus, par exemple par collage.
          L'invention est décrite ci-après plus en détail
avec référence aux dessins annexés dans lesquels :

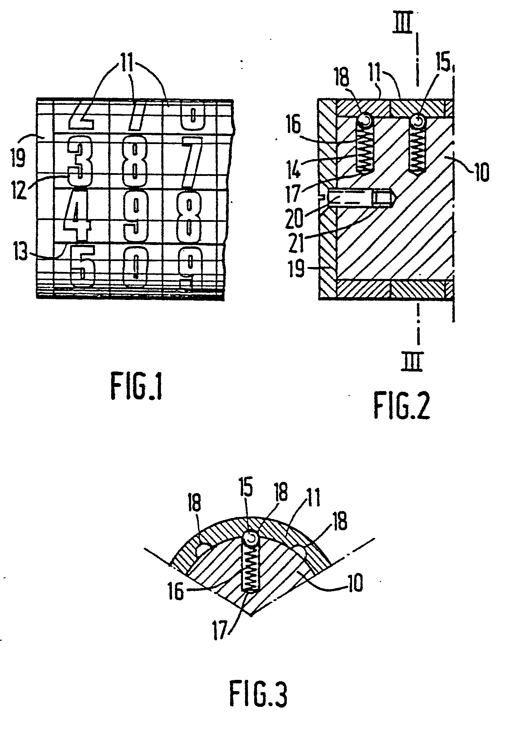

          fig. 1 est une vue partielle, en élévation d'une extrémité d'un premier mode de réalisation d'un dispositif conforme à l'invention.
          fig. 2 est une vue partielle, en coupe axiale de
l'extrémité du dispositif de la fig. 1.
          fig. 3 est une coupe par la ligne III-III de la fig.1.
          fig. 4 est une vue perspective éclatée montrant un
autre mode de réalisation du dispositif conforme à l'invention.
          Tel qu'il est représenté aux figures 1 à 3 le dispositif conforme à l'invention comporte un noyau cylindrique 10
sur lequel sont enfilées une série de bagues 11 qui dans l'exemple choisi, portent, régulièrement répartis sur leur surface
externe, des chiffres 12 séparés par un trait 13.
          Le noyau 10 (fig. 2 et 3) est percé d'une rangée de
trous 14 dans chacun desquels est introduite une bille 15 sollicitée vers l'extérieur du trou par un ressort 16 qui s'appuie,
d'une part sur la bille 15, et d'autre part, sur le fond 17
du trou 14. Les bagues 11 sont montées à rotation sur le noyau
10 et elles comportent, sur leur surface interne,des évidements
18 en forme de calotte sphérique,dans lesquels peut venir s'engager une bille 15 sous l'action du ressort 16 correspondant.
Les bagues 11 sont enfilées l'une après l'autre sur le noyau 10, dont la longueur est égale à la somme des largeurs des tambours, en prenant soin d'enfoncer chaque fois la bille 15 qui se trouve ensuite retenue dans son logement lorsque tous les tambours sont en place. Ceux-ci sont alors maintenus sur le noyau 10 à l'aide de disques d'extrémité 19 fixés à chaque extrémité du noyau 10 à l'aide d'une vis 20 pénétrant dans un trou taraudé 21 ménagé à cet effet dans le noyau. Si on le désire et pour faciliter le montage, l'entrée des trous 14 peut être matée après introduction des billes 12, celles-ci se trouvant ainsi retenues dans leurs trous 14.

Pour utiliser le dispositif et réaliser des alignements de chiffres, il suffit de faire tourner les bagues 11 autour du noyau 10, chacune des bagues se trouvant immobilisée dans la position voulue par la bille 15 pénétrant dans un évidement 18.

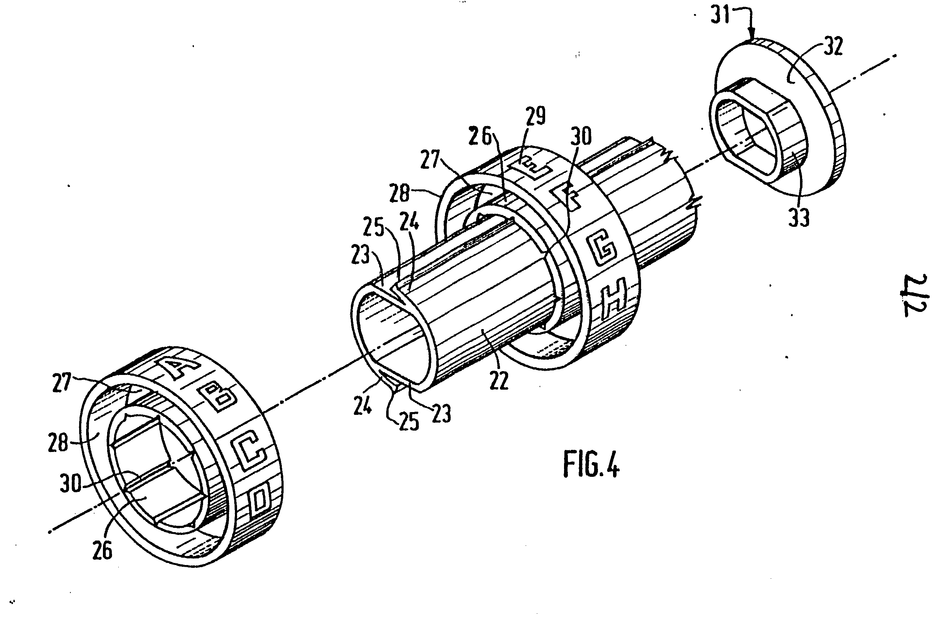

Dans le dispositif représenté à la fig.4, le noyau est constitué par un tube 22 en matière plastique, de forme générale cylindrique mais présentant deux méplats 23. De l'un des bords de chacun de ces méplats part une languette 24, venue d'une pièce avec le tube 24 qui s'étend sur toute la longueur de ce dernier et dont l'épaisseur, compte tenu de la nature de la matière utilisée, lui permet de plier élastiquement en direction du méplat 23 correspondant. A l'extrémité de chacune des languettes 24 est ménagée une nervure 25 qui fait saillie radialement par rapport au contour général du noyau 20. Chaque bague est constituée par un manchon interne 26 reliée par une paroi terminale 27 à une bague externe 28 qui porte, dans l'exemple choisi, des lettres 29. A la surface interne de la bague 26 sont ménagées des rainures 30 dans lesquelles peuvent venir s'engager les nervures 25 portées par les languettes 24. Les bagues 26-28 sont enfilées les unes après les autres sur le tube 22 dont la longueur est égale au total de la largeur des bagues externes 28 et l'ensemble est maintenu en place par deux bouchons tels que celui représenté en 31 et qui est constitué par une plaque 32 sur laquelle fait saillie un manchon 33 dont la forme est adaptée pour qu'il puisse s'introduire dans le tube 22 . Le bouchon 31 est maintenu dans le tube 22, soit par tout système d'encliquetage approprié, soit au besoin à l'aide de colle.

Lorsque l'on veut faire tourner chacun des manchons 26-28 sur le noyau 22 pour réaliser un alignement choisi des lettres 29 portées par les bagues 26-28 il suffit de l'entraîner à la main. La nervure 25 est repoussée élastiquement hors de la rainure 30 dans laquelle elle se trouvait engagée, ce qui permet la libre rotation du tambour qui se trouve ensuite immobilisé dans la position voulue par réintroduction, sous l'action de l'élasticité de la languette 24, dans la rainure 30 correspondant à cette position.

On conçoit que l'on peut apporter aux exemples ainsi décrits de nombreuses variantes d'ordre secondaire sans sortir du cadre de l'invention. C'est ainsi que, notamment, l'on peut varier le genre des signes portés par les bagues rotatives et, dans l'exemple de la fig. 4, partager les languettes 24 avec leurs saillies 25, par un trait de scie perpendiculaire à l'axe du tube 22, en autant de fractions qu'il y a de bagues 26-28. Bien entendu le nombre de bagues peut varier selon la volonté et les choix du concepteur. Il peut être également prévu de réaliser des faces en nombre variable sur l'une ou plusieurs des bagues.

REVENDICATIONS

1. Dispositif cylindrique à éléments rotatifs incorporés, notamment pour jeux éducatifs comportant une série de tambours montés à rotation côte à côte sur un noyau commun et coopérant avec des moyens agencés pour assurer l'immobilisation individuelle de ces tambours dans une position angulaire choisie ou aléatoire par rapport à ce noyau, chacun de ces tambours portant extérieurement des signes disposés à sa périphérie selon une répartition uniforme qui est la même pour l'ensemble des tambours, de façon à permettre de former des alignements successifs de signes parallèlement à l'axe de rotation des tambours sur le noyau et dans lequel les tambours portant des signes à leur périphérie externe sont constitués par des bagues comportant, sur leur surface interne, des échancrures réparties de façon correspondant à la répartition desdits signes sur chaque tambour et le noyau cylindrique sur lequel sont montés les tambours et dont le diamètre externe est sensiblement égal au diamètre interne des bagues formant les tambours, comporte au moins une partie en saillie, s'étendant parallèlement à l'axe longitudinal du noyau et qui est agencée pour s'engager dans les échancrures desdites bagues, caractérisé en ce que la partie en saillie prévue sur le noyau, qui peut être continue ou discontinue et ce noyau lui-même, sont agencés pour permettre à la partie en saillie de s'effacer élastiquement à l'intérieur du contour circulaire de la section droite du noyau, des moyens étant prévus pour immobiliser axialement les bagues sur le noyau.

2. Dispositif selon la revendication 1, caractérisé en ce que l'effacement de la partie en saillie du noyau est obtenue en ménageant dans le noyau, le long de l'une de ses génératrices, une succession de trous radiaux, espacés de façon à correspondre chacun à un tambour lorsque l'ensemble des tambours est enfilé sur le noyau, et en disposant, dans chacun de ces trous, un organe tel qu'une bille ou un téton, susceptible de coulisser dans le trou et sollicité vers l'extérieur par des moyens élastiques s'appuyant, d'une part

sur le fond de chaque trou, et d'autre part, sur l'organe correspondant.

3. Dispositif selon la revendication 2 caractérisé en ce qu'il comporte des moyens pour empêcher l'organe de s'échapper du trou lorsque le tambour correspondant n'est pas monté sur le noyau.

4. Dispositif selon la revendication 1 caractérisé en ce que l'on prévoit,à la surface externe du noyau, selon une génératrice de celui-ci, un évidement dans lequel peut s'effacer une barrette longitudinale reliée au corps du noyau par un élément flexible, ladite barrette étant agencée pour venir s'engager dans les échancrures des tambours.

5. Dispositif selon la revendication 4 caractérisé en ce que le noyau , de préférence évidé, comporte un méplat longitudinal de l'un des bords duquel part une languette flexible prolongeant la périphérie circulaire du noyau et à l'extrémité libre de laquelle est formée une nervure capable de s'engager dans le méplat, par flexion de la languette,pour se dégager desdites échancrures.

6. Dispositif selon l'une quelconque des revendications 1 à 5, caractérisé en ce que le noyau comporte à sa périphérie plusieurs saillies d'arrêt réparties sur ladite périphérie.

7. Dispositif selon l'une quelconque des revendications 1 à 6 caractérisé en ce que les moyens d'immobilisation axiale des bagues sur le noyau sont constitués par des plateaux de préférence circulaires, dont une dimension transversale est supérieure au diamètre externe du noyau et qui sont fixés chacun sur une extrémité du noyau, en laissant entre eux une distance égale à la totalité de l'épaisseur des bagues.

8. Dispositif selon la revendication 7 caractérisé en ce que les plateaux sont vissés sur l'extrémité du noyau.

9. Dispositif selon la revendication 7 caractérisé en ce que les plateaux d'immobilisation comportent en leur centre une partie apte à s'engager à frottement dur dans l'évidement du noyau et qui peut être rendue solidaire de ce dernier par tous moyens connus, par exemple par collage.

FIG.1

FIG.2

FIG.3

FIG.4

2/2

0113705

0113705

**Office européen des brevets**

**RAPPORT DE RECHERCHE EUROPEENNE**

Numéro de la demande

EP 84 40 0041

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | CH-A- 443 743 (J. DUHEM) <br> * Page 2, lignes 22-26, 33-37; figures 2,3,6 * | 1 | A 63 F 9/08 <br> G 09 B 1/20 |
| Y | | 2,6-8 | |
| | --- | | |
| Y | FR-A-2 492 674 (NINTENDO CO. LTD.) <br> * Page 6, lignes 11-17; page 8, lignes 4-6; figures 2-4 * | 2,6-8 | |
| | --- | | |
| X,P | GB-A-2 107 997 (KEUN WHA INC.) <br><br> * Revendications; figures 3,4,18 * | 1,2,4, 6-8 | |
| | --- | | DOMAINES TECHNIQUES RECHERCHES (Int. Cl. 3) |
| A | US-A-1 391 986 (SMITH) <br> * Page 1, lignes 50-55 * | 7,9 | |
| | --- | | A 63 F <br> G 09 B <br> G 09 D |
| A | US-A-2 476 580 (BERGMAN) | | |
| | --- | | |
| A | US-A-1 470 845 (JOHNSON) | | |
| | --- | | |
| A | US-A-2 411 717 (FAY) | | |
| | --- | | |
| A | FR-A- 956 300 (MÜHL) | | |
| | ---     -/- | | |

Le présent rapport de recherche a été établi pour toutes les revendications

| Lieu de la recherche <br> LA HAYE | Date d'achèvement de la recherche <br> 30-03-1984 | Examinateur <br> JEST Y.G.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen
des brevets

**RAPPORT DE RECHERCHE EUROPEENNE**

EP 84 40 0041

| | **DOCUMENTS CONSIDERES COMME PERTINENTS** | | Page 2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | DE-C- 450 879 (THÖRNBLAD) | | |
| | ----- | | |
| | | | DOMAINES TECHNIQUES RECHERCHES (Int. Cl. ³) |
| | Le présent rapport de recherche a été établi pour toutes les revendications | | |

| Lieu de la recherche LA HAYE | Date d'achèvement de la recherche 30-03-1984 | Examinateur JEST Y.G.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82